# EUROPEAN PATENT APPLICATION

(11) **EP 4 803 672 A1**
(43) Date of publication of application: **09.09.2026**
(21) Application number: 24885692.4
(22) Date of filing: 29.10.2024
(51) Int. Cl.: C25C 3/06, C22B 21/06, C22C 1/02

(54) **METHOD FOR DECREASING OR REMOVING ADDITIVE COMPONENT AND/OR IMPURITY IN ALUMINUM ALLOY**

(30) Priority: 31.10.2023 JP 2023186216
(71) Applicant: National University Corporation University of Toyama, Toyama-shi, Toyama 930-8555 (JP)
(72) Inventor: ONO, Hideki, Toyama-shi, Toyama 930-8555 (JP); KATO, Kengo, Toyama-shi, Toyama 930-8555 (JP)
(74) Representative: Wunderlich & Heim Patentanwälte PartG mbB
(86) International application number: PCT/JP2024/038451
(87) International publication number: WO 2025/094921

(57) **Abstract**

An objective is to provide a novel method using molten Sn to reduce or eliminate additive components and impurities in aluminum alloys. The method is based on a three-layer electrolytic process using a Sn-Al system alloy layer of a bottom layer as an anode, a refined Al layer of a top layer as a cathode, and a middle layer as a molten electrolytic bath.

## Description

### TECHNICAL FIELD

The present invention relates to a method for reducing or eliminating alloying elements in aluminum alloy materials.

### BACKGROUND ART

Aluminum alloys are broadly divided into two types: wrought materials such as extruded materials and rolled materials, and casting materials such as die-castings.

Among these, to the casting materials, a relatively large amount of Si is added for the purpose of improving the flowability of molten metal in casting, reducing the coefficient of thermal expansion, improving wear resistance, and the like.

In some cases, Cu is also added for the purpose of improving strength.

When a product is die-cast, gates/overflows and runner parts are produced in addition to the product part, and the parts other than this product are re-melted and used repeatedly, thus an Fe component tends to be mixed therein.

Therefore, for example, in JIS ADC12 alloy, as shown in, by mass, 9.6 to 12.0% of Si, 1.05 to 3.05% of Cu, and 1.3% or less of Fe, the amount and its acceptable range of components such as Si, Cu, and Fe are relatively large and wide, and a recycling rate of scrap materials is also high.

In contrast, for example, as a typical example of the wrought materials, JIS A6063 has, by mass, 0.20 to 0.6% of Si, 0.35% or less of Fe, 0.10% or less of Cu, and 0.45 to 0.9% of Mg, so the amounts added are small and their acceptable ranges are relatively small.

Under such circumstances, it is one of the reasons why the recycling rate of wrought materials has not been improved.

Therefore, if it is possible to reduce or eliminate the content of Si, Fe, and Cu from aluminum alloys, it is expected that not only the recycling of wrought materials will be improved, but also the value added as high-purity aluminum raw materials will be enhanced.

A previously proposed method for reducing or eliminating impurities in aluminum alloys is to add Mn to a molten aluminum alloy to form intermetallic compounds with an Fe component, and then crystallize and separate them (Patent Document 1).

A method has also been proposed where Mg is added to form intermetallic compounds with Fe and Si components and to crystallize and separate them (Patent Document 2).

However, such methods of crystallization and separation of intermetallic compounds consume large amounts of added Mn or Mg and the recycling is difficult.

### RELATED-ART DOCUMENT

### PATENT DOCUMENT

Patent Document 1: JP-A-8-35021
Patent Document 2: JP-A-2022-83833
Patent Document 3: JP-A-10-371844
Patent Document 4: JP-2023-077600

### NON-PATENT DOCUMENT

Non-Patent Document 1: A. J. McAlister and D. J. Kahan: Bulletin of Alloy Phase Diagram, 4(1983), 410.
Non-Patent Document 2: R. W. Olesinski and G. J. Abbaschian: Bulletin of Alloy Phase Diagram, 5(1984), 273
Non-Patent Document 3: K. C. Hari Kumar, P. Wollants, and L. Delaey: Calphad, 20(1996), pp. 139-149.
Non-Patent Document 4: S. Furtauer, D. Li, D. Cupid, H. Flandorfer: Intermetallics, 34(2013), 142-147.
Non-Patent Document 5: Hiroaki HOSHIKAWA, Ichiro TANAKA, Tomohiro MEGUMI: SUMITOMO KAGAKU (2013), 10-19.
Non-Patent Document 6: W. J Coy and R. S. Mateer: Trans. ASM, 58(1965), 99.
Non-Patent Document 7: A. E. Schwaneke, W. L. Falke and V. R. Miller: J. Chem. Eng. Data, 23(1978), 298-301.

### SUMMARY OF THE INVENTION

### TECHNICAL PROBLEM

An objective of the invention is to provide a novel method using molten Sn to reduce or eliminate additive components and impurities in aluminum alloys.

### SOLUTION TO PROBLEM

A method for reducing or eliminating additive components or/and impurities in aluminum alloys according to the invention is based on a three-layer electrolytic process using a Sn-Al system alloy layer of a bottom layer as an anode, a refined Al layer of a top layer as a cathode, and a middle layer as a molten electrolytic bath.

The principle of the three-layer electrolytic process, as disclosed in Non-Patent Document 5, also referred to as the three-layer electrolytic refining process, is one that was originally established to further increase the purity of electrolytic aluminum produced by the Hall-Heroult process.

For the anode alloy layer of the bottom layer, an Al-Cu alloy containing 30 to 40% of Cu is used, and its specific gravity is about 3.0.

The process involves the electrolytic movement of Al in this Al-Cu alloy through the electrolytic bath of the middle layer to the refined Al cathode layer of the top layer.

Since the specific gravity of the refined Al of the top layer is about 2.3, the molten electrolytic bath of the middle layer must be lighter than the specific gravity of the anode alloy layer of the bottom layer and heavier than the specific gravity of the refined Al of the cathode side of the top layer, and thus the specific gravity of the molten electrolytic bath of the middle layer is about 2.7.

In addition, salts of metals that are more active and have a higher electrical conductivity than aluminum are used.

The invention includes the use of a Sn-Al alloy containing 0 to about 50% of Al instead of the Al-Cu alloy used in the three-layer electrolytic process described in this Non-Patent Document 5.

The specific gravity of this molten Sn-Al system alloy is about 3.5 (according to Non-Patent Documents 6 and 7).

In the invention, aluminum alloy materials supplied to the bottom layer can be a molten alloy that solid Si or/and solid Fe are crystallized and separated in the molten Sn-Al system alloy.

If the Sn-Al system alloy layer of the bottom layer contains a large amount of Si, the density of the anode alloy may decrease due to the specific gravity of Si of about 2.3, and electrolysis is likely to become difficult.

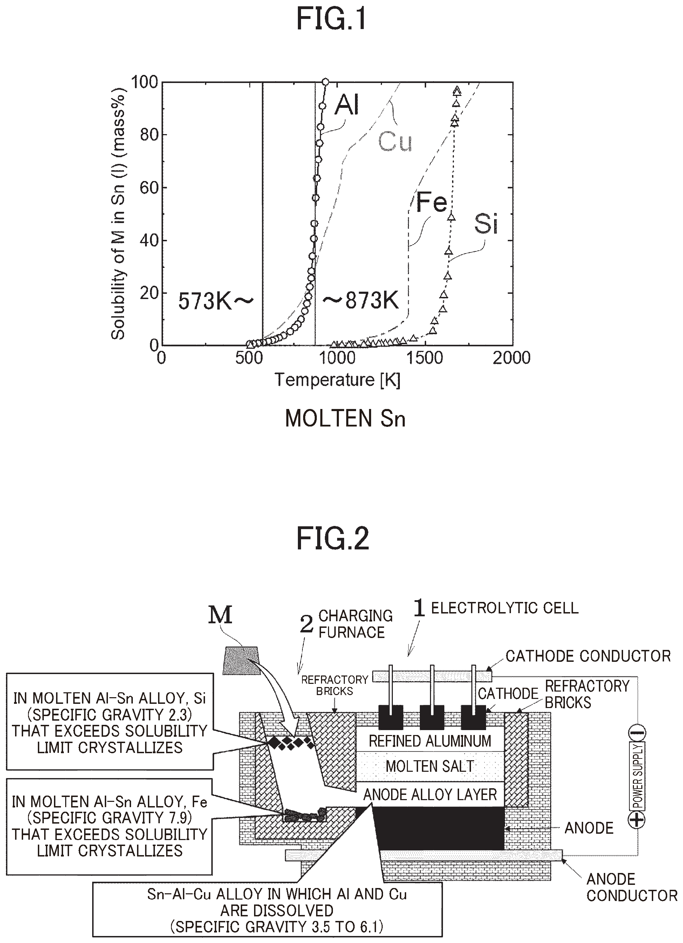

However, from the phase diagram of Al and Sn disclosed in Non-Patent Document 1, the phase diagram of Si and Sn disclosed in Non-Patent Document 2, the phase diagram of Fe and Sn disclosed in Non-Patent Document 3, and the phase diagram of Cu and Sn disclosed in Non-Patent Document 4, the solubility curves of Al, Cu, Fe, and Si versus a temperature of molten Sn as shown in FIG. 1 can be obtained.

From this solubility curve in FIG. 1, the following can be seen.

When the temperature of molten Sn is raised to 1,000 K or more, Al, Cu, Si, and Fe are dissolved.

When the temperature of molten Sn is lowered to about 873 K, about 50% of Al and about 30% of Cu are dissolved, but Si and Fe are not dissolved but crystallized and separated as solid Si and Fe.

Since the specific gravity of Si is 2.3, relatively light, it can be floated and separated, and on the other hand, since the specific gravity of Fe is 7.9, relatively heavy, it can be sedimented and separated.

This has already been demonstrated in Patent Document 4, previously filed for a patent application by the present inventors.

In the invention, therefore, the Sn-Al alloy layer of the bottom layer, eliminating Si and Fe in advance with molten Sn-Al, can be used, but if a melt temperature of the molten Sn-Al system alloy is a temperature at which solid Si and solid Fe are crystallized, solid Si and solid Fe can be separated in a supply section that supplies aluminum raw material corresponding to Al moving from the anode Sn-Al alloy to the cathode side, resulting in continuous supply of aluminum raw material.

In the invention, since Cu contained in the aluminum raw material is dissolved in the molten Sn-Al alloy layer, the Sn-Al system alloy layer can be a Sn-Al-Cu system alloy layer.

### ADVANTAGEOUS EFFECTS OF INVENTION

In the invention, since the Sn-Al system alloy layer or the Sn-Al-Cu system alloy layer is used as the anode of the bottom layer in the three-layer electrolytic process, setting a melt temperature in a predetermined range makes it possible to recover further higher purity aluminum, to improve horizontal recycling of wrought materials and to obtain further higher purity aluminum, while reducing or eliminating Si and Fe components of the aluminum raw materials that are recycled raw materials.

### BRIEF DESCRIPTION OF THE DRAWINGS

FIG. 1 is solubility curves of Al, Cu, Si, and Fe in molten Sn.
FIG. 2 is a schematic diagram of electrolytic equipment according to the invention.

### DESCRIPTION OF EMBODIMENTS

FIG. 2 is a schematic diagram of electrolytic equipment of a method for reducing or eliminating additive components or impurities in an aluminum alloy based on a three-layer electrolytic process according to the invention.

The principle is to apply a voltage between the cathode and the anode and electrolyze molten salt.

The equipment includes an electrolytic cell 1 made of refractory bricks and the like, and a charging furnace 2 that supplies a molten alloy to an anode alloy cell of a bottom layer of the electrolytic cell 1.

The electrolytic cell 1 has, as an anode alloy layer that is an anode side, a Sn-Al system alloy layer in which Al is dissolved in Sn, or a Sn-Al-Cu system alloy layer in which Cu is further dissolved, and the specific gravity of these is about 3.5 to 6.1.

A refined Al layer is formed by electrolysis in a top layer that is a cathode side.

The specific gravity of the refined Al layer is about 2.3.

A middle layer has a molten electrolytic bath composed of molten salt.

This molten electrolytic bath uses a known electrolytic bath as described in Patent Document 3 and Non-Patent Document 5.

For example, fluorides and chlorides of Na, Ba, Al, Ca, and Mg, or mixed salts thereof, are used, and those with the specific gravity of about 2.7, that are more active than aluminum and have good conductivity, are selected.

In the three-layer electrolytic process, the Al dissolved in the molten Sn moves to the refined Al (cathode) side as Al³⁺ ions by molten salt electrolysis, and high-purity aluminum is obtained.

As Al is decreased in the anode alloy layer by molten electrolysis, aluminum raw material M containing components (impurities) such as Si, Fe, and Cu in Al is charged from the charging furnace 2.

In this charging furnace 2, the molten Sn-Al alloy held at a temperature of about 873 K, is stored in advance.

At this temperature of about 873 K, about 50% by mass of Al is dissolved in the molten Sn, and as the electrolysis proceeds, the dissolved Al decreases; and when the aluminum raw material containing impurities such as Si, Fe, and Cu in Al is charged from the top of the charging furnace 2, the Al dissolves but the Si does not dissolve and floats to the top side of the charging furnace 2 as solid Si with the specific gravity of 2.3 to be separated.

This solid Si can be used as a Si raw material.

In addition, Fe sediments and separates, because Fe does not dissolve and has the specific gravity of 7.9.

This makes it possible to suppress Si and Fe to be mixed to the anode alloy layer side, thus the three-layer electrolytic refining can be realized.

### INDUSTRIAL APPLICABILITY

The invention makes it possible to recycle as aluminum materials of high purity because the invention can reduce or eliminate components in aluminum alloys collected from cities and the like.

### REFERENCE SIGNS LIST

- 1: Electrolytic cell
- 2: Charging furnace

## Claims

1. A method for reducing or eliminating additive components or/and impurities in aluminum alloys based on a three-layer electrolytic process, the three-layer electrolytic process using:
a Sn-Al system alloy layer of a bottom layer as an anode,
a refined Al layer of a top layer as a cathode, and
a middle layer as a molten electrolytic bath.

2. The method for reducing or eliminating additive components or/and impurities in aluminum alloys according to claim 1, wherein an aluminum alloy material supplied to the bottom layer is a molten alloy, in which solid Si or/and solid Fe are crystallized and separated in a molten Sn-Al system alloy.

3. The method for reducing or eliminating additive components or/and impurities in aluminum alloys according to claim 1, wherein the Sn-Al system alloy layer is a Sn-Al-Cu system alloy layer.

4. The method for reducing or eliminating additive components or/and impurities in aluminum alloys according to claim 2, wherein a melt temperature of the molten Sn-Al system alloy is a temperature at which the solid Si and the solid Fe are crystallized.
